# EUROPEAN PATENT SPECIFICATION

(11) **EP 1 755 097 B1**
(45) Date of publication and mention of the grant of the patent: **30.04.2008**
(21) Application number: 05106963.1
(22) Date of filing: 28.07.2005
(51) Int. Cl.: G09F 3/00, H01M 2/10, H01M 2/02, H01M 6/50

(54) **Method and system for battery authentication for wireless and other devices**
Verfahren und System zur Batterie Authentifizierung für drahtlose und andere Geräte
Méthode et système d'authentification de batteries pour appareillage sans fils et autre

(43) Date of publication of application: 21.02.2007
(73) Proprietor: Research In Motion Limited, Waterloo, Ontario N2L 3W8 (CA)
(72) Inventor: Guthrie, Martin, RR1 Moffat Ontario, L0P 1J0 (CA)
(74) Representative: Rickard, David John

(56) References cited:
- EP-A- 0 581 301
- DE-A1- 19 907 498
- US-A- 3 889 407
- US-A- 6 020 082

## Description

This application relates to the field of battery authentication, and more specifically, to a method and system for identifying batteries and cells used in wireless or other devices as originating from an original supplier of the wireless or other devices.

Current wireless mobile communication devices include microprocessors, memory, batteries, soundcards, and run one or more software applications. Examples of software applications used in these wireless devices include micro-browsers, address books, email clients, and wavetable instruments. Additionally, wireless devices have access to a plurality of services via the Internet. A wireless device may, for example, be used to browse web sites on the Internet, to transmit and receive graphics, and to execute streaming audio and/or video applications.

Wireless devices are typically supplied with a battery pack, which includes one or more cells, for providing power to the wireless device. The supplier of the wireless device is typically also the supplier of the battery pack. In the case of a battery pack fault in the field, it may be necessary for warranty and other reasons to identify the battery as a genuine battery provided by the supplier of the wireless device or as a counterfeit or non-genuine battery provided by another supplier.

For example, when a battery fault occurs, the battery pack markings may become burnt or damaged so as to render them illegible. In such a situation, identification of the original supplier of the battery becomes difficult. In addition, manufacturers of cells used in genuine battery packs may also provide cells to manufactures of counterfeit battery packs.

Existing methods that are used to identify genuine battery packs include the following: label holograms, "invisible ink" markings, and small markings formed in the plastic or metal components of a battery pack. However, these existing methods have drawbacks. For example, most of these marking methods can be easily copied, including trademark and hologram markings. EP 581301 discloses a battery having a casing with inscribed thereon a code bar number.

A need therefore exists for improved means to authenticate batteries and cells used in wireless or other devices as originating from an original supplier of the wireless or other devices. Accordingly, a solution that addresses, at least in part, the above and other shortcomings is desired.

### GENERAL

According to a first aspect of the present invention there is provided a battery pack comprising: a housing; at least one cell within the housing; wherein the housing has inscribed thereon a battery pack date code for identifying a date of manufacture of the battery pack; and, wherein the cell has inscribed thereon a number that is associated with the battery pack date code in an external list; whereby comparing the number on the cell to the number recorded in the list for the battery pack date code of the battery pack determines whether the cell belongs to the battery pack.

Preferably, the number includes a cell date code for identifying a date of manufacture of the cell.

Preferably, at least one of the battery pack date code and cell date code includes an identifier for identifying a manufacturer of the battery pack. The code may be a three-digit number which may be a random number that is selected at a predetermined interval. Preferably, the predetermined interval is a week.

Preferably, the battery pack further comprising means for coupling the battery pack to a wireless device to provide power to the wireless device.

According to another aspect of invention there is provided a method using a computer system for identifying at least one cell with a battery pack, the cell being originally located within a housing of the battery pack, the method comprising: receiving a battery pack date code inscribed on the housing, the battery pack date code for identifying a date of manufacture of the battery pack; receiving a number inscribed on the cell, the number being associated with the battery pack date code in a list; and, comparing the number on the cell to the number recorded in the list for the battery pack date code of the battery pack to thereby determine whether the cell belongs to the battery pack.

Preferably, the number includes a cell date code for identifying a date of manufacture of the cell.

Preferably, at least one of the battery pack date code and cell date code includes an identifier for identifying a manufacturer of the battery pack. The code may be a three-digit number which may be a random number that is selected at a predetermined interval. Preferably, the predetermined interval is a week.

Preferably, the battery pack has means for coupling the battery pack to a wireless device to provide power to the wireless device.

According to a still further aspect of the present invention there is provided a system for identifying at least one cell with a battery pack, the cell being originally located within a housing of the battery pack, the system comprising: a processor coupled to memory and an input device and adapted to: receive a battery pack date code inscribed on the housing, the battery pack date code for identifying a date of manufacture of the battery pack; receive a number inscribed on the cell, the number being associated with the battery pack date code in a list; and, compare the number on the cell to the number recorded in the list for the battery pack date code of the battery pack to thereby determine whether the cell belongs to the battery pack.

Preferably, the number includes a cell date code for identifying a date of manufacture of the cell.

Preferably, at least one of the battery pack date code and cell date code includes an identifier for identifying a manufacturer of the battery pack. The number may be a three-digit number which may be a random number that is selected at a predetermined interval. Preferably, the predetermined interval is a week.

Preferably, the battery pack has means for coupling the battery pack to a wireless device to provide power to the wireless device.

### BRIEF DESCRIPTION OF THE DRAWINGS

Features and advantages of the embodiments of the present application will become apparent from the following detailed description, taken in combination with the appended drawings, in which:

FIG. 1 is a block diagram illustrating a wireless device adapted in accordance with an embodiment of the application;

FIG. 2 is a block diagram illustrating a memory of the wireless device of FIG. 1;

FIG. 3 is a front view illustrating the wireless device of FIG. 1;

FIG. 4 is a rear view illustrating the wireless device of FIG. 1;

FIG. 5 is a front view illustrating a battery pack for use with the wireless device of FIG. 1 in accordance with an embodiment of the application;

FIG. 6 is a front sectional view illustrating cells within the housing of the battery pack of FIG. 5 in accordance with an embodiment of the application;

FIG. 7 is a list illustrating the association between battery pack date codes and cell numbers in accordance with an embodiment of the application; and,

FIG. 8 is a flowchart illustrating operations of modules within the memory of a computer system for identifying at least one cell with a battery pack, the cell being originally located within a housing of the battery pack, in accordance with an embodiment of the application.

It will be noted that throughout the appended drawings, like features are identified by like reference numerals.

### DESCRIPTION OF PREFERRED EMBODIMENTS

According to one aspect of the application, there is described a battery pack comprising: a housing; at least one cell within the housing; wherein the housing has inscribed thereon a battery pack date code for identifying a date of manufacture of the battery pack; and, wherein the cell has inscribed thereon a number that is associated with the battery pack date code in an external list; whereby comparing the number on the cell to the number recorded in the list for the battery pack date code of the battery pack determines whether the cell belongs to the battery pack.

Preferably, the number includes a cell date code for identifying a date of manufacture of the cell. Preferably, at least one of the battery pack date code and the cell date code includes an identifier for identifying a manufacturer of the battery pack. Preferably, the number is a three-digit number. Preferably, the number is a random number that is selected at a predetermined interval. Preferably, the predetermined interval is a week. Preferably, the battery pack has means for coupling the battery pack to a wireless device to provide power to the wireless device.

According to another aspect of the application, there is described a method using a computer system for identifying at least one cell with a battery pack, the cell being originally located within a housing of the battery pack, the method comprising: receiving a battery pack date code inscribed on the housing, the battery pack date code for identifying a date of manufacture of the battery pack; receiving a number inscribed on the cell, the number being associated with the battery pack date code in a list; and, comparing the number on the cell to the number recorded in the list for the battery pack date code of the battery pack to thereby determine whether the cell belongs to the battery pack.

According to another aspect of the application, there is described a system for identifying at least one cell with a battery pack, the cell being originally located within a housing of the battery pack, the system comprising: a processor coupled to memory and an input device and adapted to: receive a battery pack date code inscribed on the housing, the battery pack date code for identifying a date of manufacture of the battery pack; receive a number inscribed on the cell, the number being associated with the battery pack date code in a list; and, compare the number on the cell to the number recorded in the list for the battery pack date code of the battery pack to thereby determine whether the cell belongs to the battery pack.

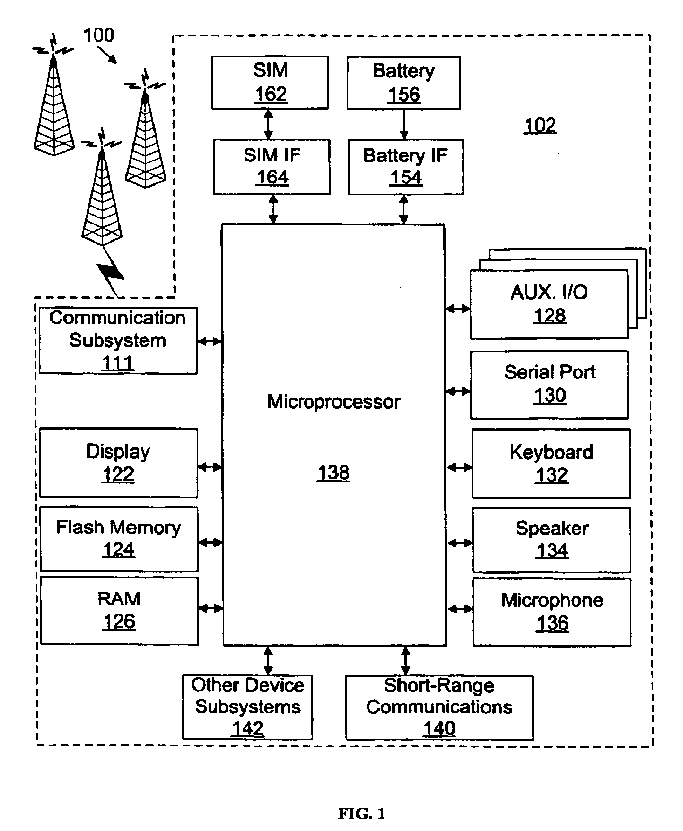

FIG. 1 is a block diagram illustrating a wireless device 102 adapted in accordance with an embodiment of the application. Typically, the wireless device 102 is a handheld device 102. The wireless device 102 is a two-way communication device having at least voice and advanced data communication capabilities, including the capability to communicate with other computer systems. Depending on the functionality provided by the device 102, it may be referred to as a data messaging device, a two-way pager, a cellular telephone with data messaging capabilities, a wireless Internet appliance, or a data communication device (with or without telephony capabilities). The device 102 may communicate with any one of a plurality of fixed transceiver stations 100 within its geographic coverage area.

The wireless device 102 will normally incorporate a communication subsystem 111, which includes a RF receiver, a RF transmitter, and associated components, such as one or more (preferably embedded or internal) antenna elements and, local oscillators ("LOs"), and a processing module such as a digital signal processor ("DSP") (all not shown). As will be apparent to those skilled in field of communications, particular design of the communication subsystem 111 depends on the communication network 100 in which the device 102 is intended to operate.

Network access is associated with a subscriber or user of the device 102 and therefore the device 102 requires a Subscriber Identity Module (or "SIM" card) 162 to be inserted in a SIM interface ("IF") 164 in order to operate in the network. The device 102 is a battery-powered device so it also includes a battery IF 154 for receiving one or more rechargeable batteries 156. Such a battery 156 provides electrical power to most if not all electrical circuitry in the device 102, and the battery IF 154 provides for a mechanical and electrical connection for it. The battery IF 154 is coupled to a regulator (not shown) which provides power to the circuitry of the device 102.

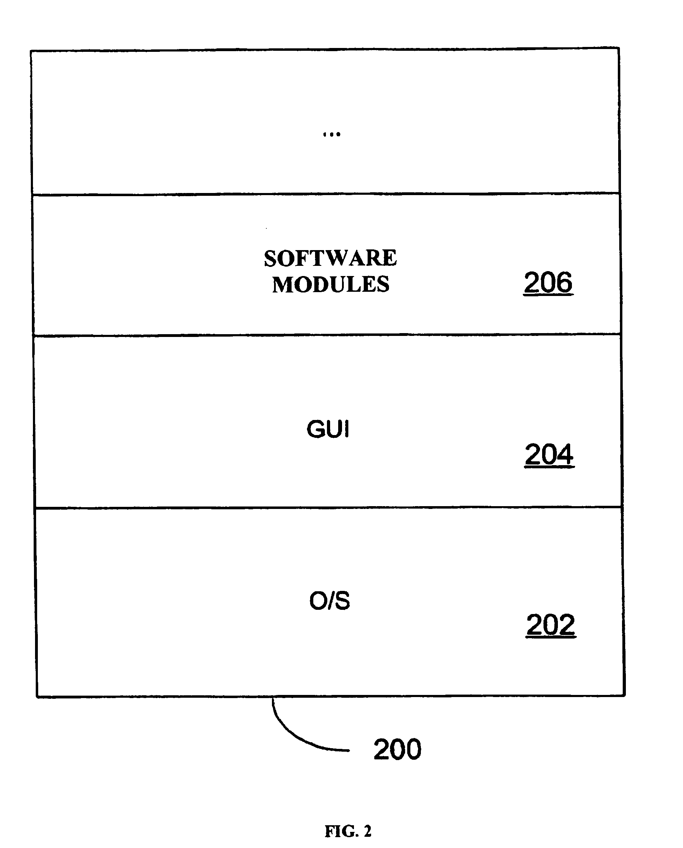

The wireless device 102 includes a microprocessor (or central processing system ("CPU")) 138 which controls overall operation of the device 102. Communication functions, including at least data and voice communications, are performed through the communication subsystem 111. The microprocessor 138 also interacts with additional device subsystems such as a display 122, a flash memory 124 or other persistent store, a random access memory ("RAM") 126, auxiliary input/output ("I/O") subsystems 128, a serial port 130, a keyboard 132, a speaker 134, a microphone 136, a short-range communications subsystem 140, and any other device subsystems generally designated at 142. Some of the subsystems shown in FIG. 2 perform communication-related functions, whereas other subsystems may provide "resident" or on-device functions. Notably, some subsystems, such as the keyboard 132 and display 122, for example, may be used for both communication-related functions, such as entering a text message for transmission over a communication network, and device-resident functions such as a calculator or task list. Operating system software used by the microprocessor 138 is preferably stored in a persistent store such as the flash memory 124, which may alternatively be a read-only memory ("ROM") or similar storage element (not shown). Those skilled in the art will appreciate that the operating system, specific device applications, or parts thereof, may be temporarily loaded into a volatile store such as RAM 126.

The microprocessor 138, in addition to its operating system functions, preferably enables execution of software applications on the device 102. A predetermined set of applications which control basic device operations, including at least data and voice communication applications, will normally be installed on the device 102 during its manufacture. A preferred application that may be loaded onto the device 102 may be a personal information manager ("PIM") application having the ability to organize and manage data items relating to the user such as, but not limited to, instant messaging ("IM"), email, calendar events, voice mails, appointments, and task items. Naturally, one or more memory stores are available on the device 102 and SIM 162 to facilitate storage of PIM data items and other information.

The PIM application preferably has the ability to send and receive data items via the wireless network 100. In a preferred embodiment, PIM data items are seamlessly integrated, synchronized, and updated via the wireless network 100, with the user's corresponding data items stored and/or associated with a host computer system (not shown) thereby creating a mirrored host computer on the device 102 with respect to such items. This is especially advantageous where the host computer system is the user's office computer system (not shown). Additional applications may also be loaded onto the device 102 through the network 100, an auxiliary I/O subsystem 128, serial port 130, short-range communications subsystem 140, or any other suitable subsystem 142, and installed by a user in RAM 126 or preferably in a non-volatile store (e.g., flash memory 124) for execution by the microprocessor 138. Such flexibility in application installation increases the functionality of the device 102 and may provide enhanced on-device functions, communication-related functions, or both. For example, secure communication applications may enable electronic commerce functions and other such financial transactions to be performed using the wireless device 102.

In a data communication mode, a received signal such as a text message, an email message, or web page download will be processed by the communication subsystem 111 and input to the microprocessor 138. The microprocessor 138 will preferably further process the signal for output to the display 122 and/or to the auxiliary I/O device 128. A user of the wireless device 102 may also compose data items, such as email messages, for example, using the keyboard 132 in conjunction with the display 122 and possibly the auxiliary I/O device 128. These composed items may be transmitted over a communication network 100 through the communication subsystem 111 or the short range communication subsystem 140. The keyboard 132 is preferably a complete alphanumeric keyboard and/or telephone-type keypad.

For voice communications, the overall operation of the wireless device 102 is substantially similar, except that the received signals would be output to the speaker 134 and signals for transmission would be generated by the microphone 136. Alternative voice or audio I/O subsystems, such as a voice message recording subsystem, may also be implemented on the device 102. Although voice or audio signal output is preferably accomplished primarily through the speaker 134, the display 122 may also be used to provide, for example, an indication of the identity of a calling party, duration of a voice call, or other voice call related information.

The serial port 130 shown in FIG. 1 is normally implemented in a personal digital assistant ("PDA")-type communication device for which synchronization with a user's desktop computer is a desirable, albeit optional, component. The serial port 130 enables a user to set preferences through an external device or software application and extends the capabilities of the device 102 by providing for information or software downloads to the device 102 other than through a wireless communication network 100. The alternate download path may, for example, be used to load an encryption key onto the device 102 through a direct and thus reliable and trusted connection to thereby provide secure device communication.

The short-range communications subsystem 140 shown in FIG. 1 is an additional optional component which provides for communication between the device 102 and different systems or devices (not shown), which need not necessarily be similar devices. For example, the subsystem 140 may include an infrared device and associated circuits and components, or a Bluetooth™ communication module to provide for communication with similarly-enabled systems and devices. (Bluetooth™ is a registered trademark of Bluetooth SIG, Inc.)

FIG. 2 is a block diagram illustrating a memory 200 of the wireless device 102 of FIG. 1. The memory 200 has various software components for controlling the device 102 and may include flash memory 124, RAM 126, or ROM (not shown), for example. In accordance with an embodiment of the invention, the wireless device 102 is intended to be a multi-tasking wireless communications device configured for sending and receiving data items and for making and receiving voice calls. To provide a user-friendly environment to control the operation of the device 102, an operating system ("O/S") 202 resident on the device 102 provides a basic set of operations for supporting various applications typically operable through a graphical user interface ("GUI") 204. For example, the O/S 202 provides basic input/output system features to obtain input from the auxiliary I/O 128, keyboard 132, and the like, and for facilitating output to the user. One or more software modules 206 for managing communications or for providing personal digital assistant like functions may also be included.

Thus, the wireless device 102 includes computer executable programmed instructions for directing the device 102 to implement various applications. The programmed instructions may be embodied in one or more software modules 206 resident in the memory 200 of the wireless device 102. Alternatively, the programmed instructions may be embodied on a computer readable medium (such as a CD disk or floppy disk) which may be used for transporting the programmed instructions to the memory 200 of the wireless device 102. Alternatively, the programmed instructions may be embedded in a computer-readable, signal-bearing medium that is uploaded to a network by a vendor or supplier of the programmed instructions, and this signal-bearing medium may be downloaded through an interface 111, 130, 140 to the wireless device 102 from the network by end users or potential buyers.

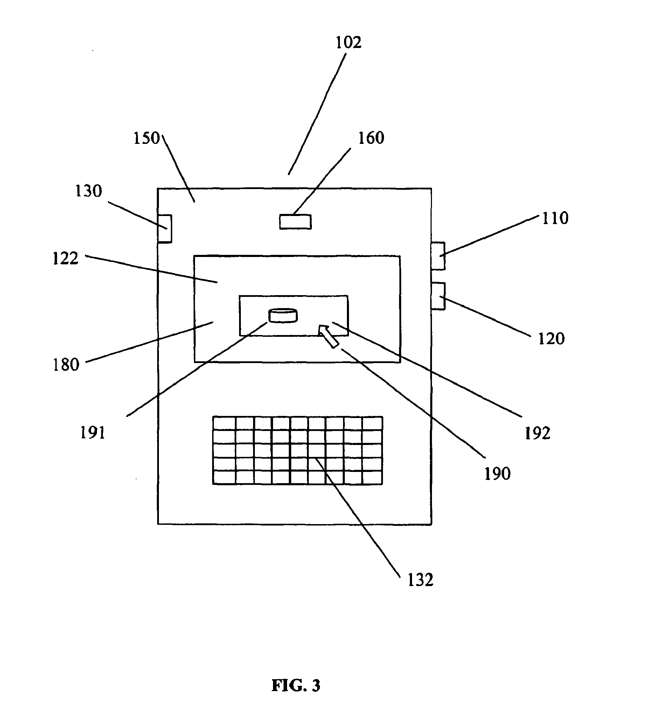

FIG. 3 is a front view illustrating the wireless device 102 of FIG. 1. As mentioned above, the wireless device 102 can be a data and voice-enabled handheld device. The wireless device 102 includes a casing 150, a display screen 122, a graphical user interface ("GUI") 180, a keyboard (or keypad) 132, a thumbwheel (or trackwheel) 110, various select buttons 120, and various signal inputs/outputs 160 (e.g., power connector input, microphone, speaker, data interface input, etc.). Internally, the wireless device 102 includes one or more circuit boards, a CPU 138, memory 200, a battery 156, an antenna, etc. (not shown), which are coupled to the signal inputs/outputs 160, keyboard 132, display screen 122, etc.

The microprocessor 138 of the wireless device 102 is typically coupled to one or more devices 110, 120, 132 for receiving user commands or queries and for displaying the results of these commands or queries to the user on the display 122. For example, user queries may be transformed into a combination of commands for producing one or more tables of output data which may be incorporated in one or more display pages for presentation to the user. The microprocessor 138 is coupled to memory 200 for containing software modules 206 and data such as database tables and test parameters. As mentioned, the memory 200 may include a variety of storage devices typically arranged in a hierarchy of storage as understood to those skilled in the art.

A user may interact with the wireless device 102 and its software modules 206 using the graphical user interface ("GUI") 180. GUIs are supported by common operating systems and provide a display format which enables a user to choose commands, execute application programs, manage computer files, and perform other functions by selecting pictorial representations known as icons, or items from a menu through use of an input or pointing device such as a thumbwheel 110 and keyboard 132. In general, a GUI is used to convey information to and receive commands from users and generally includes a variety of GUI objects or controls, including icons, toolbars, drop-down menus, pop-up menus, text, dialog boxes, buttons, and the like. A user typically interacts with a GUI 180 presented on a display 122 by using an input or pointing device (e.g., a thumbwheel 110, a keyboard 132, etc.) to position a pointer or cursor 190 over an object 191 (i.e., "pointing" at the object) and by "clicking" on the object 191. (e.g., by depressing the thumbwheel 110, by depressing a button on the keyboard 132, etc.). This is often referred to as a point-and-click operation or a selection operation. Typically, the object 191 may be hi-lighted (e.g., shaded) when it is pointed at.

Typically, a GUI based system presents application, system status, and other information to the user in "windows" appearing on the display 122. A window 192 is a more or less rectangular area within the display 122 in which a user may view an application or a document. Such a window 192 may be open, closed, displayed full screen, reduced to an icon, increased or reduced in size, or moved to different areas of the display 122. Multiple windows may be displayed simultaneously, such as: windows included within other windows, windows overlapping other windows, or windows tiled within the display area.

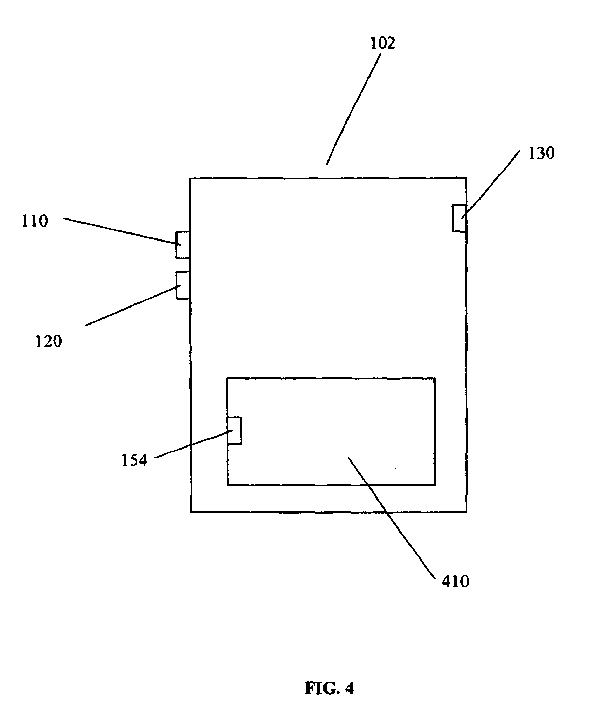

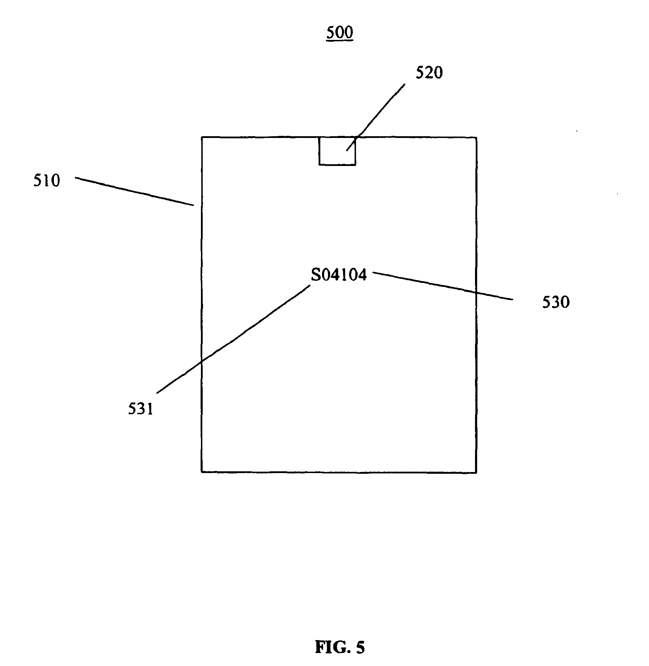

FIG. 4 is a rear view illustrating the wireless device 102 of FIG. 1. The wireless device 102 has a removable rear casing, or portion of casing, for concealing a battery cavity 410 and battery contacts (i.e., interface) 154 for the battery 156. The battery 156 may be a battery pack 500 (see FIG. 5) having a housing 510. A portion of the housing 510 may form the removable rear portion of the casing 150 of the wireless device 102. Alternatively, the battery pack 500 may be enclosed within the battery cavity 410.

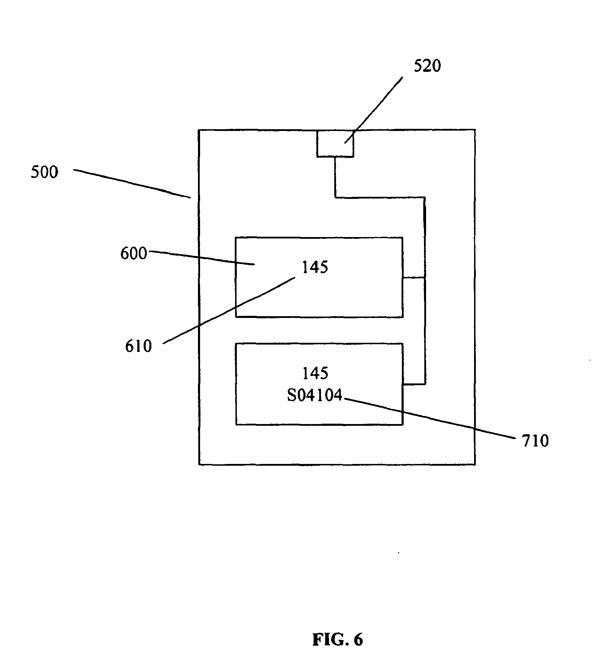

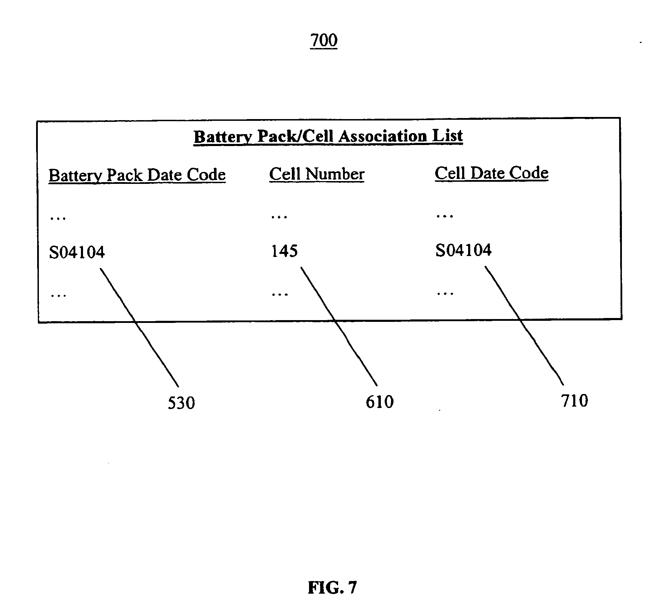

FIG. 5 is a front view illustrating a battery pack 500 for use with the wireless device 102 of FIG. 1 in accordance with an embodiment of the application. FIG. 6 is a front sectional view illustrating cells 600 within the housing 510 of the battery pack 500 of FIG. 5 in accordance with an embodiment of the application. And, FIG. 7 is a list 700 illustrating the association between battery pack date codes 530 and cell numbers 610 in accordance with an embodiment of the application.

Referring to FIGS. 5-7, the battery pack 500 has a housing 510 and at least one cell 600 within the housing 510. The battery pack 500 has means (e.g., contacts, etc.) 520 for coupling the battery pack 500 to the wireless device 102 (e.g., via interface 154) to provide power to the wireless device 102. The housing 510 has inscribed thereon a battery pack date code 530 for identifying a date of manufacture of the battery pack 500. The cell 600 has inscribed thereon a number 610 that is associated with the battery pack date code in an external list 700. By comparing the number 610 on the cell 600 to the number recorded in the list 700 for the battery pack date code 530 of the battery pack 500, a user or computer system can determine whether the cell 600 belongs to the battery pack 500.

According to an alternate embodiment, each cell 600 also has inscribed thereon a cell date code 710 for identifying a date of manufacture of the cell 600. Thus, the number 610 may include the cell date code 710. According to this embodiment, the group of cell date code 710, battery pack date code 530, and 3-digit number 610 must all match in the list 700 in order to determine if the battery pack 500 is genuine.

The battery pack date code 530 provides lot traceability for components of the battery pack 500 (e.g., a protection circuit, a thermal fuse, cells 600, and plastics components). According to one embodiment, the battery pack date code 530 (e.g., "S04104") includes a 5-digit number (i.e., "04104") preceded by a single uppercase letter 531 (i.e., "S"). This letter 531 represents the name of the manufacturer. For example, the letter "S" 531 could represent the manufacturer Sanyo™. The first two numeric digits (i.e., "04") in the date code 530 represent the year of manufacture. The second two digits (i.e., "10") represent the week. And, the final digit (i.e., "4") represents the day of week. Sunday is considered the first day of the week. The year code (i.e., "04") is updated at the start of the first week in the year. For example, if Sanyo™ manufactured a battery pack 500 on March 10, 2004, the date code 530 would be S04104", where "04" = the year 2004, "10" = the 10th week in the year, "4" = 4th day of the week. Of course, the battery pack date code 530 may have an alternate format (e.g., day/month/year, etc.).

The number 610 inscribed on each cell 600 may be a 3-digit random code, which is changed weekly. The number 610 will not be repeated within at least a 2-year time period. According to one embodiment, the random code 610 is updated every time the start of a week falls in a new month. In this way, the update of the random code 610 for a cell 600 may happen at the same time that there is an update in the battery pack date code 530 for that week. Of course, the number 610 may have more or less than three digits, it may be changed at a rate of more or less than weekly, and its repetition frequency may be more or less than two years.

The optional cell date code 710 may be structured in a manner similar to that of the battery pack date code 530.

Thus, according to one embodiment, the manufacturer or supplier of the battery pack 500 inscribes a number 610 (e.g., a three digit number) onto each cell 600. This inscription may be performed with a laser. The number 610 is changed with the date code 530 of the battery pack 500. The manufacturer or supplier of the battery pack 500 maintains a list 700 of pack date codes 530 and 3-digit numbers 610. This list may be a physical list or an electronic list stored in the memory of a computer system. And, by checking the list 700 for the proper battery pack date code 530 and number 610 combination (and optionally with the cell date code 710), a battery pack 700 can be authenticated.

Advantageously, while most marking methods can be copied, and counterfeit battery pack suppliers can copy trademarks and holograms markings, by using the revolving key (i.e., number 610) of the present application the copying of markings is made more difficult.

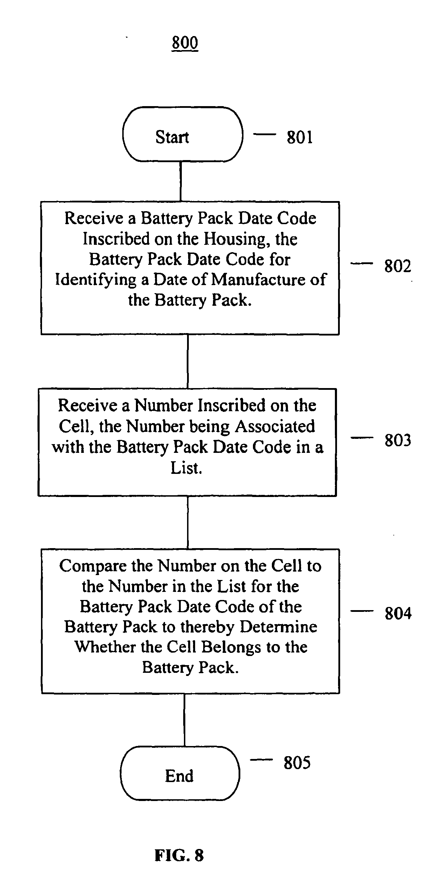

FIG. 8 is a flowchart illustrating operations of modules 800 within the memory of a computer system for identifying at least one cell 600 with a battery pack 500, the cell 600 being originally located within a housing 510 of the battery pack 500, in accordance with an embodiment of the application. The computer system (not shown) may be a personal computer system, a server system, or even a wireless device 102. Accordingly, the computer system has a processor coupled to memory, an input device (e.g., a mouse, etc.), and a display screen or output device (e.g., a printer, etc.).

At step 801, the operations 800 start.

At step 802, a battery pack date code 530 inscribed on the housing 510 is received, the battery pack date code 530 for identifying a date of manufacture of the battery pack 500.

At step 803, a number 610 inscribed on the cell 600 is received, the number 610 being associated with the battery pack date code 530 in a list 700.

At step 804, the number 610 on the cell 600 is compared to the number recorded in the list 700 for the battery pack date code 530 of the battery pack 500 to thereby determine whether the cell 600 belongs to the battery pack 500.

At step 805, the operations 800 end.

Preferably, the number 610 includes a cell date code 710 for identifying a date of manufacture of the cell 600. Preferably, at least one of the battery pack date code 530 and the cell date code 710 includes an identifier 531 for identifying a manufacturer of the battery pack 500. Preferably, the number 610 is a three-digit number. Preferably, the number 610 is a random number that is selected at a predetermined interval. Preferably, the predetermined interval is a week. Preferably, the battery pack 500 has means (e.g., contacts, etc.) 520 for coupling the battery pack 500 to a wireless device 102 (e.g., via interface 154) to provide power to the wireless device 102.

The above detailed description of the embodiments of the present application does not limit their implementation to any particular computer programming language. The embodiments of the present application may be implemented in any computer programming language provided that the operating system ("OS") provides the facilities that may support the requirements of these embodiments. A preferred embodiment is implemented in the JAVA™ computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the embodiments of the present application. In accordance with further aspects of the present application there is provided an apparatus such as a computer system, methods for adapting this system, as well as articles of manufacture such as a computer readable medium having program instructions recorded thereon for practising the method of the application.

The embodiments of the invention described above are intended to be exemplary only. The scope of the invention is therefore intended to be limited solely by the scope of the appended claims.

## Claims

1. A battery pack comprising:
a housing;
at least one cell within the housing;
wherein the housing has inscribed thereon a battery pack date code for identifying a date of manufacture of the battery pack; and,
wherein the cell has inscribed thereon a number that is associated with the battery pack date code in an external list;
whereby comparing the number on the cell to the number recorded in the list for the battery pack date code of the battery pack determines whether the cell belongs to the battery pack.

2. A battery pack as claimed in claim 1 wherein the number comprises a cell date code for identifying a date of manufacture of the cell.

3. A battery pack as claimed in claim 2 or claim 3 wherein at least one of the battery pack date code and cell date code comprises an identifier for identifying a manufacturer of the battery pack.

4. A battery pack as claimed in any one of claims 1 to 3
wherein the number is a three-digit number.

5. A battery pack as claimed in any one of claims 1 to 4
wherein the number is a random number that is selected at a predetermined interval.

6. A battery pack as claimed in claim 5 wherein the predetermined interval is a week.

7. The battery pack as claimed in any one of claims 1 to 6 and further comprising means for coupling the battery pack to a wireless device to provide power to the wireless device.

8. A method using a computer system for identifying at least one cell with a battery pack, the cell being originally located within a housing of the battery pack, the method comprising:
receiving a battery pack date code inscribed on the housing, the battery pack date code for identifying a date of manufacture of the battery pack;
receiving a number inscribed on the cell, the number being associated with the battery pack date code in a list; and,
comparing the number on the cell to the number recorded in the list for the battery pack date code of the battery pack to thereby determine whether the cell belongs to the battery pack.

9. A method as claimed in claim 8 wherein the number comprises a cell date code for identifying a date of manufacture of the cell.

10. A method as claimed in claim 8 or claim 9 wherein at least one of the battery pack date code and cell date code comprises an identifier for identifying a manufacturer of the battery pack.

11. A method as claimed in any one of claims 8 to 10
wherein the number is a three-digit number.

12. A method as claimed in any one of claim 8 to 11 wherein the number is a random number that is selected at a predetermined interval.

13. A method as claimed in claim 12 wherein the predetermined interval is a week.

14. A method as claimed in any one of claims 8 to 13
wherein the battery pack has means for coupling the battery pack to a wireless device to provide power to the wireless device.

15. A system for identifying at least one cell with a battery pack, the cell being originally located within a housing of the battery pack, the system comprising:
a processor coupled to memory and an input device and adapted to:
receive a battery pack date code inscribed on the housing, the battery pack date code for identifying a date of manufacture of the battery pack;
receive a number inscribed on the cell, the number being associated with the battery pack date code in a list; and,
compare the number on the cell to the number recorded in the list for the battery pack date code of the battery pack to thereby determine whether the cell belongs to the battery pack.

16. A system as claimed in claim 15 wherein the number comprises a cell date code for identifying a date of manufacture of the cell.

17. A system as claimed in claim 15 or 16 wherein at least one of the battery pack date code and cell date code comprises an identifier for identifying a manufacturer of the battery pack.

18. A system as claimed in any one of claims 15 to 17
wherein the number is a three-digit number.

19. A system as claimed in any one of claims 15 to 18
wherein the number is a random number that is selected at a predetermined interval.

20. A system as claimed in claim 19 wherein the predetermined interval is a week.

21. A system as claimed in any one of claims 15 to 20
wherein the battery pack has means for coupling the battery pack to a wireless device to provide power to the wireless device.

## Patentansprüche

1. Batteriesatz, umfassend:
ein Gehäuse;
mindestens eine Batteriezelle innerhalb des Gehäuses;
wobei das Gehäuse mit einem Batteriesatz-Datumscode zur Identifizierung eines Herstellungsdatums des Batteriesatzes beschriftet ist; und
wobei die Batteriezelle mit einer Nummer beschriftet ist, die in einer externen Liste mit dem Batteriesatz-Datumscode assoziiert ist; wodurch das Vergleichen der Nummer auf der Batteriezelle mit der in der Liste eingetragenen Nummer für den Batteriesatz-Datumscode des Batteriesatzes die Bestimmung ermöglicht, ob die Batteriezelle zu dem Batteriesatz gehört.

2. Batteriesatz gemäß Anspruch 1, wobei die Nummer einen Batteriezellen-Datumscode zur Identifizierung eines Herstellungsdatums der Batteriezelle umfasst.

3. Batteriesatz gemäß Anspruch 2, wobei mindestens einer des Batteriesatz-Datumscodes und des Batteriezellen-Datumscodes eine Kennung zur Identifizierung eines Herstellers des Batteriesatzes umfasst.

4. Batteriesatz gemäß in jedem der Ansprüche 1 bis 3, wobei die Nummer eine dreistellige Nummer ist.

5. Batteriesatz gemäß jedem der Ansprüche 1 bis 4, wobei die Nummer eine zufällige Nummer ist, die mit einem vorgegebenen Intervall ausgewählt ist.

6. Batteriesatz gemäß Anspruch 5, wobei das vorgegebene Intervall eine Woche ist.

7. Batteriesatz gemäß jedem der Ansprüche 1 bis 6, des Weiteren umfassend Mittel zum Koppeln des Batteriesatzes mit einem Drahtlosgerät, um das Drahtlosgerät mit Strom zu versorgen.

8. Verfahren unter Verwendung eines Computersystems zum Identifizieren von mindestens einer Batteriezelle in einem Batteriesatz, wobei sich die Batteriezelle ursprünglich innerhalb eines Gehäuse des Batteriesatzes befindet, das Verfahren umfassend:
das Empfangen eines als Beschriftung auf das Gehäuse eingetragenen Batteriesatz-Datumscodes, wobei der Batteriesatz-Datumscode zur Identifizierung eines Herstellungsdatums des Batteriesatzes dient;
das Empfangen einer als Beschriftung auf die Batteriezelle eingetragenen Nummer, wobei die Nummer in einer externen Liste mit dem Batteriesatz-Datumscode assoziiert ist; und
das Vergleichen der Nummer auf der Batteriezelle mit der in der Liste eingetragenen Nummer für den Batteriesatz-Datumscode des Batteriesatzes, um **dadurch** zu bestimmen, ob die Batteriezelle zu dem Batteriesatz gehört.

9. Verfahren gemäß Anspruch 8, wobei die Nummer einen Batteriezellen-Datumscode zur Identifizierung eines Herstellungsdatums der Batteriezelle umfasst.

10. Verfahren gemäß Anspruch 8 oder Anspruch 9, wobei mindestens einer des Batteriesatz-Datumscodes und des Batteriezellen-Datumscodes eine Kennung zur Identifizierung eines Herstellers des Batteriesatzes umfasst.

11. Verfahren gemäß in jedem der Ansprüche 8 bis 10, wobei die Nummer eine dreistellige Nummer ist.

12. Verfahren gemäß jedem der Ansprüche 8 bis 11, wobei die Nummer eine zufällige Nummer ist, die mit einem vorgegebenen Intervall ausgewählt ist.

13. Verfahren gemäß Anspruch 12, wobei das vorgegebene Intervall eine Woche ist.

14. Verfahren gemäß jedem der Ansprüche 8 bis 13, wobei der Batteriesatz Mittel zum Koppeln des Batteriesatzes mit einem Drahtlosgerät umfasst, um das Drahtlosgerät mit Strom zu versorgen.

15. System zum Identifizieren von mindestens einer Batteriezelle in einem Batteriesatz, wobei sich die Batteriezelle ursprünglich innerhalb eines Gehäuse des Batteriesatzes befindet, das System umfassend:
einen Prozessor, der mit einem Speicher und einem Eingabegerät gekoppelt ist und angepasst ist zum:
Empfangen eines als Beschriftung auf das Gehäuse eingetragenen Batteriesatz-Datumscodes, wobei der Batteriesatz-Datumscode zur Identifizierung eines Herstellungsdatums des Batteriesatzes dient; Empfangen einer als Beschriftung auf die Batteriezelle eingetragenen Nummer, wobei die Nummer in einer externen Liste mit dem Batteriesatz-Datumscode assoziiert ist; und zum Vergleichen der Nummer auf der Batteriezelle mit der in der Liste eingetragenen Nummer für den Batteriesatz-Datumscode des Batteriesatzes, um **dadurch** zu bestimmen, ob die Batteriezelle zu dem Batteriesatz gehört.

16. System gemäß Anspruch 15, wobei die Nummer einen Batteriezellen-Datumscode zur Identifizierung eines Herstellungsdatums der Batteriezelle umfasst.

17. System gemäß Anspruch 15 oder Anspruch 16, wobei mindestens einer des Batteriesatz-Datumscodes und des Batteriezellen-Datumscodes eine Kennung zur Identifizierung eines Herstellers des Batteriesatzes umfasst.

18. System gemäß in jedem der Ansprüche 15 bis 17, wobei die Nummer eine dreistellige Nummer ist.

19. System gemäß jedem der Ansprüche 15 bis 18, wobei die Nummer eine zufällige Nummer ist, die mit einem vorgegebenen Intervall ausgewählt ist.

20. System gemäß Anspruch 19, wobei das vorgegebene Intervall eine Woche ist.

21. System gemäß jedem der Ansprüche 15 bis 20, wobei der Batteriesatz Mittel zum Koppeln des Batteriesatzes mit einem Drahtlosgerät umfasst, um das Drahtlosgerät mit Strom zu versorgen.

## Revendications

1. Un bloc-batterie comportant :
un logement ;
au moins une cellule à l'intérieur du logement ;
dans lequel est inscrit sur le logement un code de date de bloc-batterie destiné à identifier une date de fabrication du bloc-batterie ; et,
dans lequel est inscrit sur la cellule un numéro qui est associé au code de date de bloc-batterie dans une liste externe ;
grâce auquel la comparaison du numéro sur la cellule au numéro enregistré dans la liste pour le code de date de bloc-batterie du bloc-batterie détermine si la cellule appartient au bloc-batterie.

2. Un bloc-batterie tel que revendiqué dans la revendication 1 dans lequel le numéro comporte un code de date de cellule destiné à identifier une date de fabrication de la cellule.

3. Un bloc-batterie tel que revendiqué dans la revendication 2 dans lequel au moins un code parmi le code de date de bloc-batterie et le code de date de cellule comporte un identifiant destiné à identifier un fabricant du bloc-batterie.

4. Un bloc-batterie tel que revendiqué dans n'importe laquelle des revendications 1 à 3
dans lequel le numéro est un numéro à trois chiffres.

5. Un bloc-batterie tel que revendiqué dans n'importe laquelle des revendications 1 à 4
dans lequel le numéro est un numéro aléatoire qui est sélectionné à un intervalle prédéterminé.

6. Un bloc-batterie tel que revendiqué dans la revendication 5 dans lequel l'intervalle prédéterminé est d'une semaine.

7. Le bloc-batterie tel que revendiqué dans n'importe laquelle des revendications 1 à 6 et comportant de plus des moyens destinés à coupler le bloc-batterie à un dispositif sans fil afin de fournir de l'énergie au dispositif sans fil.

8. Un procédé utilisant un système informatique destiné à identifier au moins une cellule à un bloc-batterie, la cellule étant à l'origine située à l'intérieur d'un logement du bloc-batterie, le procédé comportant :
recevoir un code de date de bloc-batterie inscrit sur le logement, le code de date de bloc-batterie étant destiné à identifier une date de fabrication du bloc-batterie ;
recevoir un numéro inscrit sur la cellule, le numéro étant associé au code de date de bloc-batterie dans une liste ; et,
comparer le numéro sur la cellule au numéro enregistré dans la liste pour le code de date de bloc-batterie du bloc-batterie afin de déterminer ainsi si la cellule appartient au bloc-batterie.

9. Un procédé tel que revendiqué dans la revendication 8 dans lequel le numéro comporte un code de date de cellule destiné à identifier une date de fabrication de la cellule.

10. Un procédé tel que revendiqué dans la revendication 8 ou la revendication 9 dans lequel au moins un code parmi le code de date de bloc-batterie et le code de date de cellule comporte un identifiant destiné à identifier un fabricant du bloc-batterie.

11. Un procédé tel que revendiqué dans n'importe laquelle des revendications 8 à 10
dans lequel le numéro est un numéro à trois chiffres.

12. Un procédé tel que revendiqué dans n'importe laquelle des revendications 8 à 11
dans lequel le numéro est un numéro aléatoire qui est sélectionné à un intervalle prédéterminé.

13. Un procédé tel que revendiqué dans la revendication 12 dans lequel l'intervalle prédéterminé est d'une semaine.

14. Un procédé tel que revendiqué dans n'importe laquelle des revendications 8 à 13
dans lequel le bloc-batterie a des moyens destinés à coupler le bloc-batterie à un dispositif sans fil afin de fournir de l'énergie au dispositif sans fil.

15. Un système destiné à identifier au moins une cellule à un bloc-batterie, la cellule étant à l'origine située à l'intérieur d'un logement du bloc-batterie, le système comportant :
un processeur couplé à une mémoire et un dispositif d'entrée et adapté pour :
recevoir un code de date de bloc-batterie inscrit sur le logement, le code de date de bloc-batterie étant destiné à identifier une date de fabrication du bloc-batterie ;
recevoir un numéro inscrit sur la cellule, le numéro étant associé au code de date de bloc-batterie dans une liste ; et,
comparer le numéro sur la cellule au numéro enregistré dans la liste pour le code de date de bloc-batterie du bloc-batterie afin de déterminer ainsi si la cellule appartient au bloc-batterie.

16. Un système tel que revendiqué dans la revendication 15 dans lequel le numéro comporte un code de date de cellule destiné à identifier une date de fabrication de la cellule.

17. Un système tel que revendiqué dans la revendication 15 ou 16 dans lequel au moins un code parmi le code de date de bloc-batterie et le code de date de cellule comporte un identifiant destiné à identifier un fabricant du bloc-batterie.

18. Un système tel que revendiqué dans n'importe laquelle des revendications 15 à 17
dans lequel le numéro est un numéro à trois chiffres.

19. Un système tel que revendiqué dans n'importe laquelle des revendications 15 à 18
dans lequel le numéro est un numéro aléatoire qui est sélectionné à un intervalle prédéterminé.

20. Un système tel que revendiqué dans la revendication 19 dans lequel l'intervalle prédéterminé est d'une semaine.

21. Un système tel que revendiqué dans n'importe laquelle des revendications 15 à 20
dans lequel le bloc-batterie a des moyens destinés à coupler le bloc-batterie à un dispositif sans fil afin de fournir de l'énergie au dispositif sans fil.
